(19) **Europäisches Patentamt / European Patent Office / Office européen des brevets**

(11) **EP 2 570 969 A1**

(12) **EUROPEAN PATENT APPLICATION**
published in accordance with Art. 153(4) EPC

(43) Date of publication:
20.03.2013 Bulletin 2013/12

(51) Int Cl.:
*G06K 9/36* (2006.01)          *G06K 9/46* (2006.01)
*G06K 9/00* (2006.01)

(21) Application number: 10851447.2

(22) Date of filing: 31.05.2010

(86) International application number:
PCT/KR2010/003443

(87) International publication number:
WO 2011/142495 (17.11.2011 Gazette 2011/46)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 13.05.2010 KR 20100044974

(71) Applicant: Iritech Inc.
Fairfax, VA 22030 (US)

(72) Inventors:
• NOVIK, Vladimir
  Seoul 151-050 (KR)
• KIM, Dae-hoon
  Seoul 135-280 (KR)
• CHOI, Hyeong-in
  Seoul 138-050 (KR)
• WEE, Nam-sook
  Seoul 138-050 (KR)
• LEE, Doo-seok
  Seoul 152-733 (KR)
• SOHN, Jung-kyo
  Seoul 136-783 (KR)

(74) Representative: Harrison Goddard Foote
Belgrave Hall
Belgrave Street
Leeds
LS2 8DD (GB)

(54) **APPARATUS AND METHOD FOR IRIS RECOGNITION USING MULTIPLE IRIS TEMPLATES**

(57)     The present invention relates to a method and apparatus for iris recognition using multiple iris templates registered for each individual. The method include acquiring at least one or two eye images of a person to be registered; generating an iris template group for registration from the at least one or two eye images, and storing and registering the iris template group in a database; photographing an eye of the person using a camera placed on a front side of an iris recognition apparatus multiple times to acquire multiple images for authentication; generating an iris template group for authentication comprising multiple iris templates from the multiple eye images; comparing the iris template group for authentication with the registered iris template group for each registered person stored in the database; and performing authentication or identification using the comparison result.

FIG. 1

Acquire at least one or two eye images of person to be registered

Generate iris template group for registration using at least one or two iris templates for registration and register iris template group in database as unique personal iris data

Acquire multiple eye images for authentication using camera

Generate iris template group for authentication using multiple iris templates for authentication generated from multiple eye images for authentication

Compare iris template group for authentication with registered iris template group for each person registered in database

Perform authentication or identification using comparison result

EP 2 570 969 A1

**Description**

[Technical Field]

The present invention relates to a method and apparatus for iris recognition using multiple iris templates registered for individuals, in which an iris template group for authentication is compared with a registered iris template group for each person stored in a database, followed by authentication or identification using the comparison result.

[Background Art]

In general, an iris recognition method performs authentication or identification by comparing an iris region extracted from an eye image photographed by a camera with an iris region extracted from another eye image. If the camera photographs an eye under bad ambient conditions, defective eye images can be acquired, such as an out of focus eye image, an iris image containing noise, an iris image covered with eyelashes, an eyelid or light reflection or the like, a partially photographed iris image, etc.

Sarnoff's camera for photographing an iris employs strong illumination for photographing an eye of a person to be registered, who is distant from the camera. In this case, reflection of illumination on an iris region in an acquired eye image causes deterioration in accuracy of iris recognition.

Thus, defects in an eye image cause errors in extracting an iris region from the eye image, and causes deterioration in accuracy of iris recognition even in the case where the iris region is normally extracted. In a conventional iris recognition method, a person to be registered is repeatedly photographed until a less defective eye image is obtained, or a defective eye image is used for iris recognition without restoration or through restoration.

In many iris recognition methods in the art, an acquired eye image is used for iris recognition through restoration. For example, noise removal for an acquired eye image containing noise, a sharpening process for an acquired out of focus eye image, and the like are used.

According to another image registration method in the art, a plurality of face images is photographed by selectively operating a plurality of lighting groups, such that a face image without reflection due to glass lenses can be obtained. This method can also be applied to an iris image, but it is very difficult to obtain one image using a plurality of images photographed under different conditions like a jigsaw puzzle.

In particular, when iris characteristics are extracted from one complete iris image obtained by applying the image registration method to a plurality of iris images acquired from one person to be registered, it is not easy to extract correct iris characteristics from the complete iris image due to regional dislocation resulting from combination of different iris images.

Moreover, in a conventional iris recognition method, if an eye image of a person wearing glasses is photographed by a camera, reflection of light from the lenses of the glasses can appear in an acquired eye image. In this case, the reflection of light in the iris region causes deterioration in accuracy of iris recognition.

[Disclosure]

[Technical Problem]

Therefore, the present invention has been conceived to solve the problems of the related art as described above, and an objective of the present invention is to improve an iris recognition rate by photographing at least one iris image of a person to be authenticated using a plurality of lighting groups and generating an iris template group for authentication such that the iris template group can be used for iris recognition when authenticating an iris of a person using an iris recognition apparatus.

Another objective of the present invention is to decrease memory consumption while reducing a data processing time for iris recognition by generating an iris template containing iris data in at least two available regions including left and right sides of an iris which are less covered, or one of the left and right side of the iris, and performing iris recognition using the iris template.

A further objective of the present invention is to allow rapid iris comparison and recognition using an iris template in a clear available region among at least two regions without any confusion in comparison of multiple iris templates for authentication by generating iris template groups with respect to at least two available regions for iris recognition, storing the iris template group in a database, and additionally generating an determination tag for use in comparison for identifying an iris template group for registration and authentication.

Yet another objective of the present invention is to prevent the recognition rate from being lowered due to an error resulting from transformation of an iris or an error upon setting a boundary between iris regions by obtaining distances between two small regions for authentication while shifting each location of the two small regions by at least one pixel in up, down, left and right directions, and employing the smallest distance between the two small regions for authentication, as disclosed in Korean Patent No. 10-0786204 issued to the applicant of the present invention.

Still another objective of the present invention is to prevent the iris recognition rate from being lowered, irrespective of reflection by glass lenses appearing in an iris region upon authentication or identification for a person wearing glasses, using a registered iris template group comprising at least two registered iris templates, and an iris template group for authentication obtained from multiple eye images.

[Technical Solution]

One aspect of the present invention provides an iris recognition method, which includes: acquiring at least one or two eye images of a person to be registered; generating an iris template group for registration from the at least one or two eye images, and storing and registering the iris template group in a database; photographing an eye of the person using a camera placed on a front side of an iris recognition apparatus multiple times to acquire multiple images for authentication; generating an iris template group for authentication comprising multiple iris templates from the multiple eye images; comparing the iris template group for authentication with the registered iris template group for each registered person stored in the database; and performing authentication or identification using the comparison result.

Another aspect of the present invention provides an iris recognition apparatus, which includes: a camera attached to a front side of the iris recognition apparatus to photograph multiple eye images of a person to be registered; a database for storing and registering an iris template group comprising at least one or two iris templates for registration obtained from the multiple eye images; a lighting device including a plurality of lighting groups such that the camera photographs the multiple eye images for authentication using the plurality of lighting groups; an iris template generation unit which generates an iris template group for authentication from the multiple eye images for authentication; a comparison unit which compares the registered iris template group stored in the database with the iris template group for authentication; and an authentication/identification unit which performs authentication or identification using the comparison result.

A further aspect of the present invention provides a method and apparatus for iris recognition, which can generate an iris template group having at least one or two templates for registration, store and register the iris template group in a database, photographs eye images using various lighting groups in generation of the iris templates for authentication, generate iris template groups for authentication from the multiple eye images, and perform authentication using an iris template for authentication in an available region containing relatively much iris data from among the iris template groups for authentication, thereby improving recognition rate.

Yet another aspect of the present invention provides a method and apparatus for iris recognition, which can generate iris template groups with respect to at least two available regions for iris recognition, store and register the iris template groups in a database, additionally generate a determination tag to generate an iris template for registration, and quickly perform comparison using the determination tag and a clear iris template for authentication without any confusion in comparison with multiple iris templates for authentication, photographed by a camera using various lighting groups.

Yet another aspect of the present invention provides a method and apparatus for iris recognition, which can prevent the recognition rate from being lowered due to an error resulting from transformation of an iris or an error upon setting a boundary between iris regions by obtaining distances between two small regions for authentication while shifting each location of the two small regions by at least one pixel in up, down, left and right directions, and employing the smallest distance between the two small regions for authentication, as disclosed in Korean Patent No. 10-0786204 issued to the applicant of the present invention.

[Advantageous Effects]

According to the present invention, an iris recognition rate may be improved by photographing at least one iris image of a person to be authenticated using a plurality of lighting groups and generating an iris template group for authentication such that the iris template group can be used for iris recognition when authenticating an iris of a person using an iris recognition apparatus.

In addition, according to the present invention, storage capacity of a memory may be decreased and a data processing time for iris recognition may be reduced by generating an iris template containing iris data in at least two available regions at left and right sides of an iris which are less covered, or one of the left and right side of the iris, and performing iris recognition using the iris template.

Further, according to the present invention, rapid iris comparison and recognition using an iris template in a clear available region among at least two regions may be performed without any confusion in comparison of multiple iris templates for authentication by generating iris template groups with respect to at least two available regions for iris recognition, storing and registering the iris template group in a database, and additionally generating a determination tag for use in comparison for identifying an iris template group for registration and authentication.

Further, according to the present invention, the recognition rate may be prevented from being lowered due to errors resulting from transformation of an iris or an error upon setting a boundary between iris regions by obtaining distances between two small regions for authentication while shifting each location of the two small regions by at least one pixel in up, down, left and right directions, and employing the smallest distance between the two small regions for authentication, as disclosed in Korean Patent No. 10-0786204 issued to the applicant of the present invention.

Further, according to the present invention, the iris recognition rate may be prevented from being lowered, irrespective of reflection by glass lenses appearing in an iris region upon authentication or identification for a person wearing glasses, using a registered iris template group comprising at least two registered iris templates, and an iris template group for authentication obtained from multiple eye images.

[Description of Drawings]

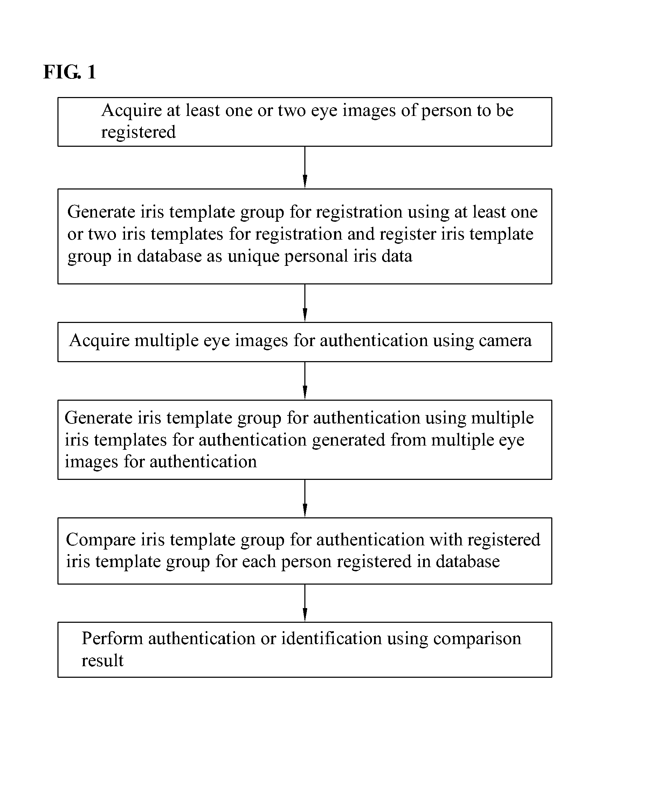

Fig. 1 is a flowchart of an iris recognition method using multiple iris templates according to the present invention.
Fig. 2 shows pictures (right and left sides) of an iris which reflects light from lighting groups of a lighting device.
Fig. 3 shows the iris of Fig. 2, which is divided into two available regions where the iris is little covered.
Fig. 4 shows each of two available regions divided into eight regions.
Fig. 5 shows an exemplary arrangement of a camera, a lighting device, and a controller.
Fig. 6 shows one registered iris template (right) compared with two iris templates (left two) for authentication with respect to the same person.

[Best Mode]

One aspect of the present invention provides an iris recognition method including: acquiring at least one or two eye images of a person to be registered; generating an iris template group for registration from the at least one or two eye images, and storing and registering the iris template group in a database; photographing an eye of the person using a camera placed on a front side of an iris recognition apparatus multiple times to acquire multiple images for authentication; generating an iris template group for authentication comprising multiple iris templates from the multiple eye images; comparing the iris template group for authentication with the registered iris template group for each registered person stored in the database; and performing authentication or identification using the comparison result.

Another aspect of the present invention provides an iris recognition apparatus, which includes a camera attached to a front side of the iris recognition apparatus to photograph multiple eye images of a person to be registered; a database for storing and registering an iris template group comprising at least one or two iris templates for registration obtained from the multiple eye images; a lighting device including a plurality of lighting groups such that the camera photographs the multiple eye images for authentication using the lighting groups; an iris template generation unit which generates an iris template group for authentication from the multiple eye images for authentication; a comparison unit which compares the registered iris template group stored in the database with the iris template group for authentication; and an authentication/identification unit which performs authentication or identification using the comparison result.

[Mode for Invention]

Next, exemplary embodiments of the present invention will be described. The present invention relates to a method and apparatus for generating multiple eye images or iris images of an individual, registering an iris template group, and performing authentication or identification using the eye images.

One aspect of the present invention provides an iris recognition method including: acquiring at least one or two eye images of a person to be registered; generating an iris template group for registration from the at least one or two eye images, and storing and registering the iris template group in a database; photographing an eye of the person using a camera placed on a front side of an iris recognition apparatus multiple times to acquire multiple images for authentication; generating an iris template group for authentication comprising multiple iris templates from the multiple eye images; comparing the iris template group for authentication with the registered iris template group for each registered person stored in the database; and performing authentication or identification using the comparison result.

Another aspect of the present invention provides an iris recognition apparatus, which includes: a camera attached to a front side of the iris recognition apparatus to photograph multiple eye images of a person to be registered; a database for storing and registering an iris template group comprising at least one or two iris templates for registration obtained from the multiple eye images; a lighting device including a plurality of lighting groups such that the camera photographs the multiple eye images for authentication using the lighting groups; an iris template generation unit which generates an iris template group for authentication from the multiple eye images for authentication; a comparison unit which compares the registered iris template group stored in the database with the iris template group for authentication; and an authentication/identification unit which performs authentication or identification using the comparison result.

According to one technical feature of the present invention, an iris template for registration is composed of at least one or two iris templates obtained from a clear eye image.

On the other hand, it can be difficult to obtain a clear eye image since eyes of a person to be authenticated are different from each other in terms of shape, distance from a camera and position, and are photographed for limited time and conditions for authentication. Thus, a plurality of lamps is placed on a front side of the apparatus to provide various lighting groups such that multiple eye images can be obtained by the camera using the various lighting groups in order to provide an iris template for authentication or identification based on a clear eye image selected from among the multiple eye images.

<Embodiments>

Exemplary embodiments of the present invention will be described in detail.

First, at least one or two eye images are acquired with respect to one person to be registered. In order to register an iris template in a database, at least one or two eye images of a person to be registered are acquired by a camera. When at least one or two eye images are acquired using the camera, lighting conditions of the lighting device for illuminating the eye and the surroundings are changed to provide as clear eye images as possible, and at least one or two iris templates are generated from the clear eye images to constitute an iris template group to be stored and registered in a database.

Next, the iris template group comprising iris templates obtained from each of the at least one or two eye images is stored and registered in the database, whereby the person can be registered in the iris recognition apparatus. This operation will be described hereinafter.

Typically, an iris data format stored in an iris database for iris recognition is called the 'iris template.' The format of the iris template is uniquely determined by a manufacturer of the iris recognition apparatus.

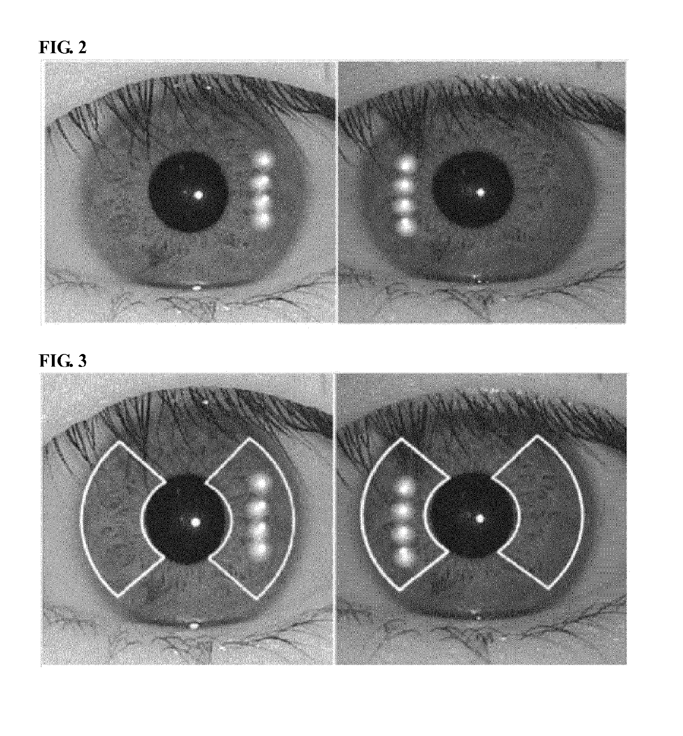

An iris region used for iris recognition according to one exemplary embodiment of the present invention is shown in Fig. 3. Generally, any iris region can be used for iris recognition. Here, image processing is performed to cut only the iris region in the form of annulus according to angles defined between a horizontal position of the eye and relative distances from the center of the pupil in a spoke direction, and the obtained annular regions are then transformed from Cartesian coordinates into polar coordinates to provide two regions a rectangular shape.

In Fig. 3, a region between -45 and +45 degrees and a region between +135 and +225 degrees are transformed from the Cartesian coordinates into the polar coordinates, thereby obtaining two rectangles. The horizontal position of the eye may be set with respect to a line connecting the iris centers of two eyes.

These two regions are combined into a single long rectangular region and then divided into a plurality of small regions having the same size. In general, the number of small divided regions, and the size of small regions converted from the Cartesian coordinates into the polar coordinates may differ depending on the eye images. However, for convenience of description, it is assumed that the number of generated small regions, the size of the small region, and the position of small regions are equally applied to all irises.

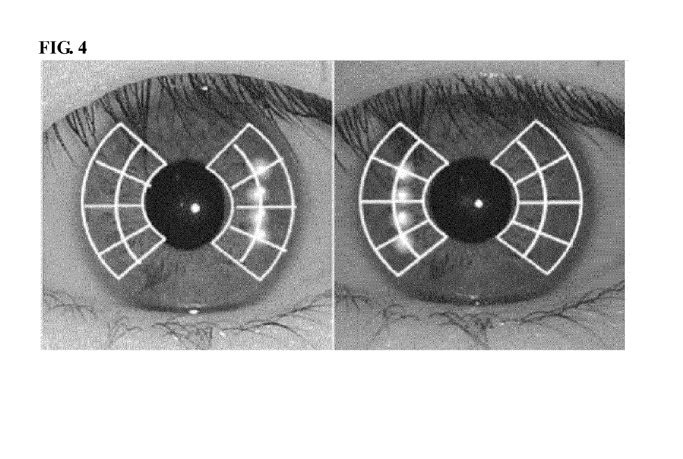

Therefore, with respect to two iris templates, it is possible to compare the small regions at the same position. Fig. 4 shows small regions divided before transformation from the Cartesian coordinates into the polar coordinates. Eight small regions are provided in each of the left and right sides, and a total of sixteen small regions is provided.

The iris recognition apparatus according to the present invention may employ any method to generate an iris template group for registration so long as it does not depart from the concept of the present invention, that is, registration of at least one or two iris templates for each person to be registered in the database.

The database of the iris recognition apparatus according to the present invention stores iris template groups as unique iris data of registered individuals. For each person to be registered, single or multiple iris template groups will be stored. The number of iris templates in the registered iris template group may differ depending on registered persons. Here, the iris data refers to information about unique personal iris patterns obtained by chromatic combination of sphincter muscle of the pupil, dilator muscle of the pupil, collagen fiber, autonomic nerve wreath, a pupilary ruff, etc.

The technical configuration of accumulating information about a person's unique iris pattern is disclosed in various literatures relating to iris recognition as well as patent documents of the applicant of the present invention, and thus detailed descriptions thereof will be omitted.

In Fig. 2, a left half and a right half may become available regions for iris recognition due to noise resulting from reflection of light. Here, a determination tag may be provided to each of the small regions in the iris templates to register the iris templates in the database so as to identify and use an available small region in each of the iris templates.

The determination tag is not necessary for iris recognition. However, the determination tag may be used to reduce time for comparison between the iris templates. That is, the small regions to which the determination tags are provided for indicating unavailable small regions due to reflection of light may be excluded from the small regions to be compared.

Next, operation of inputting the eye image for authentication will be described. In this operation, an eye image of a person (hereinafter, referred to as a person to be authenticated) is input to the iris recognition apparatus for authentication or identification.

In general, conditions for photographing an eye image for authentication or identification are likely to become worse than that for registration. For example, it is difficult to acquire a clear eye image since eyes of a person to be authenticated are somewhat different in shape, distance from the camera and position and photographed under limited time and conditions when authenticated.

The iris recognition apparatus according to the present invention acquires multiple eye images by photographing the eyes of a person to be authenticated through the camera under various lighting conditions. The acquired multiple eye images are input to the iris recognition apparatus.

The iris recognition apparatus is provided with a lighting device having a plurality of lighting groups in order to obtain the eye images for authentication under different lighting conditions in position and brightness during photographing.

Fig. 2 shows an example of the iris recognition apparatus according to the present invention, in which the lighting device having two lighting groups is used, and two eye images are photographed while alternately operating the lighting groups. Each of the lighting groups includes four lamps.

The left eye image of Fig. 2 is photographed by a first lighting group and shows a reflection pattern on the right of the iris. The right eye image is photographed by a second lighting group and shows a reflection pattern on the right of the iris.

In this embodiment, the lighting groups are selectively turned on to acquire two eye images. However, according to the present invention, several eye images may be acquired through the camera in association with the lighting device including various lighting groups to provide a clear eye image for authentication.

In Fig. 2, noise due to reflection allows the left half and the right half of each eye image to become available regions for iris recognition. When multiple eye images are acquired with respect to a person to be authenticated, all of the available regions may be combined to provide a whole iris region, if possible, for accuracy of iris recognition.

The lighting device including a plurality of lamps is connected to the camera placed on the front side of the iris recognition apparatus to provide various lighting groups, such that at least one or two eye images may be acquired using at least one or two lighting groups when the eye of a person to be authenticated is photographed by the camera.

The lighting device configured to cooperate with the camera and to allow a lighting group selected from among plural lighting groups to illuminate the eye of a person during photographing is controlled by a controller of the iris recognition apparatus.

Each of the lighting groups includes one or more light emitting diodes (LED) or lamps at different positions, and cooperates with the camera.

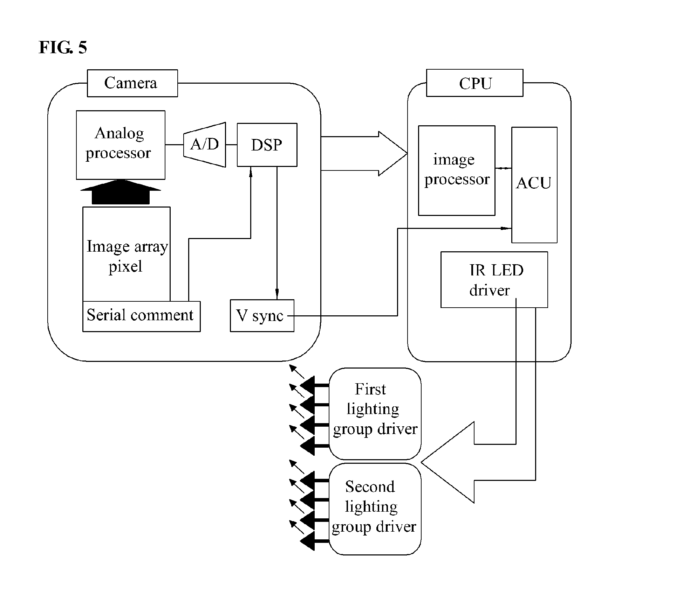

The lighting device cooperates with the camera, and the controller is provided with a control program for controlling the plural lighting groups of the lighting device to be randomly selected and turned on. Fig. 5 shows an exemplary arrangement of the camera, the lighting device and the controller, in which at least two lighting groups of the lighting device may be configured and controlled.

Next, operation of comparing the eye images for authentication with the registered iris template group will be described.

An eye image (hereinafter, referred to as an 'eye image for authentication') input for authentication or identification is converted into the same format as that of the iris template registered in the database. Each eye image for authentication is converted into the corresponding iris template (hereinafter, referred to as an 'iris template for authentication') to constitute an iris template group for authentication. Comparison between the multiple eye images for authentication and the registered personal eye image is attained by comparing the iris template group for authentication with the registered iris template group stored in the database.

Comparison between the iris template group for authentication and the registered personal iris template group stored in the database is achieved by measuring similarity therebetween. The similarity between these two groups may be measured by calculating distance corresponding to difference between the groups. Although there is difference in terms of expression due to an inversely proportional relationship between the distance and the similarity, the following description in view of the distance between the two groups may also be applied to a description in view of similarity.

According to the present invention, the distances between the iris template group for authentication and the registered iris template group are obtained (i.e., calculated), and this calculation is similar to calculation of the distances between some multiple iris templates and other multiple iris templates. This calculation is achieved by obtaining the distances between small regions corresponding to each other at the same position.

Assuming that the iris template group for authentication includes m iris templates and the registered iris template group includes n iris templates, the iris template group for authentication includes m small regions and the registered iris template group includes n small regions, since all the iris templates are divided into the same number of small regions.

Assuming that each iris template includes k small regions, the distances between the small regions for authentication and the registered small regions at the respective positions are obtained as follows. With one small region fixed, corresponding small regions are respectively selected from m small regions in the iris template group for authentication and n small regions in the registered iris template group, thereby providing pairs of small regions. As a result, a total of m×n pairs of small regions are obtained.

The distances between the small regions are calculated with respect to each pair of small regions, and the smallest value among the obtained distances is defined as a distance between the small regions for authentication and the small regions for registration at the corresponding position. For example, the distances between the small regions for authentication and the small regions for registration at the corresponding position are as follows. If there are two small regions (t, s) for authentication and one small region (r) for registration at the corresponding position and a function of obtaining the distance between two small regions is expressed as d, the distances between the small regions for authentication and the small regions for registration are as follows:

$\min(d(t,r), d(s,r))$, where $\min(a,b)$ means a minimum function.

If a determination tag indicating an unavailable region is given to a certain small region, this small region will be excluded in calculation of the distances. Thus, the distances between the small regions for authentication and the small regions for registration may be quickly calculated.

The function of measuring the distance between two small regions may include any function so long as it can measure difference between iris textures. For example, the distance between the two small regions is defined as follows. The distance between two small regions may be defined as a Euclidean distance between coefficient sequences obtained by applying Fourier transform, wavelet transform, etc. to the iris textures on the two small regions.

At this time, if there is a possibility of the eye slightly tilted from the horizon, the distances may be calculated while shifting two small regions for comparison by at least one pixel in up, down, left and right directions. Then, the smallest distance among the obtained distances is selected and designated as the distance between the two small regions.

If the distances between the corresponding small regions for authentication and registration are calculated by the foregoing method with respect to all k positions, k distances will be obtained. One among the sum, arithmetic average, geometric average and weighted average of these k distances is selected and defined as the distance between the iris template group for authentication and the registered iris template group of a person to be authenticated.

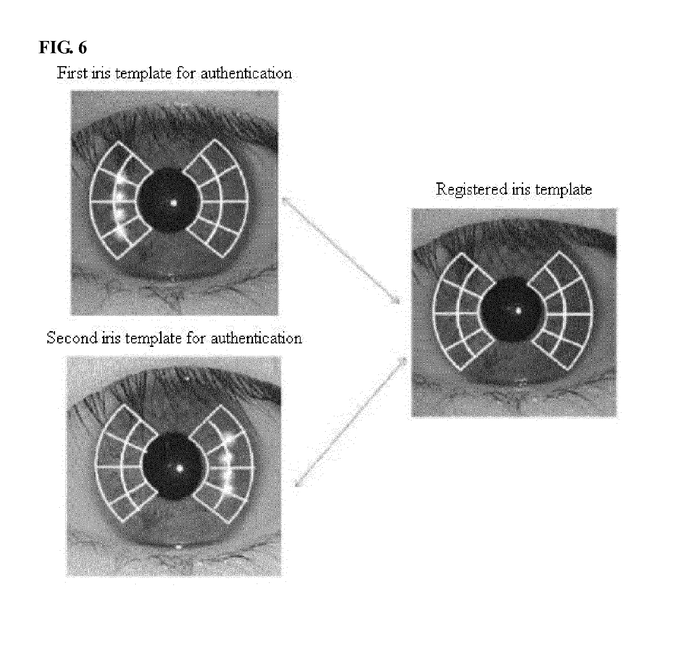

Using the foregoing example, the distance between the iris template group for authentication and the registered iris template group of a person may be obtained as follows. In the case where the iris template is divided into 16 small regions, the iris template group for authentication includes two iris templates T and S, and the registered iris template group includes one iris template R, let 16 small regions of the iris template T for authentication be $t\_1$ $t\_2$, ..., $t\_16$, 16 small regions of the iris template S for authentication be $s\_1$, $s\_2$, ..., $s\_16$, and 16 small regions of the registered iris template R be $r\_1$, $r\_2$, ..., $r\_16$. Here, the small regions having the same subscript are placed on the same position. Fig. 6 shows comparison between one registered iris template (right iris) and two iris templates for authentication with respect to one person.

Under these conditions, the distance D between the iris template group for authentication and the registered iris template group may be calculated by the arithmetic average as follows.

$$D=(\min(d(t\_1, r\_1), d(s\_1, r\_1)) + \ldots + \min(d(t\_16, r\_16), d(s\_16, r\_16)))/16$$

That is, the shortest distance min between the small regions for authentication and the registered small regions at each position is calculated, and then divided by 16 to obtain the arithmetic average.

As above, if the registered iris template group with the multiple registered templates and the iris template group for authentication with the multiple templates for authentication are used to perform authentication or identification of a person who wears glasses, the authentication or identification can be performed without lowering the iris recognition rate even though the reflection on the lenses of the glasses appears on the iris region.

Next, authentication using the comparison result will be described. If the iris template group for authentication is given as above, the distance between the iris template group for authentication and the registered iris template group for each registered person is obtained. Thus, authentication of a person will be approved if the obtained distance is less than or equal to a preset threshold value.

Likewise, identification of a certain person will be approved if the obtained distance is less than or equal to a preset threshold value.

According to another embodiment of the present invention, an iris recognition apparatus employs at least one or two iris template groups registered according to individuals. In this embodiment, the apparatus includes a camera to photograph at least one or two eye images with respect to a person to be registered, and generates an iris template group comprising iris templates for registration, each of which contains iris data with respect to at least two available regions including one or both sides of the iris.

The iris recognition apparatus includes a database which stores and registers unique iris data of a person to be registered, and the camera is attached to the front side of the apparatus to photograph eye images for authentication.

To obtain a clear eye image, a lighting device is provided with the plurality of lighting groups.

Further, the iris recognition apparatus includes an iris template generation unit, which generates an iris template group comprising iris templates for authentication, from the multiple eye images for authentication of a person.

The iris recognition apparatus further includes a comparison unit, which compares the iris template group for authentication with the registered iris template group stored in the database, and an authentication/identification unit, which performs authentication or identification using the comparison result.

The technical features of the iris recognition apparatus using the registered iris template group and the iris template group for authentication are the same as those of the iris recognition method, and thus detailed descriptions thereof will be omitted.

[Industrial Applicability]

According to the present invention, in authentication of a person using the iris recognition apparatus, the iris of the person is recognized by photographing at least one or two eye images using a plurality of lighting groups, generating an iris template group for authentication, comparing the iris template group for authentication with a registered iris template group, whereby the iris recognition rate is improved, thereby providing high industrial applicability.

**Claims**

1. An iris recognition method using an iris template group for authentication comprising multiple iris templates for authentication, the method comprising:

   acquiring at least one or two eye images of a person to be registered;
   generating an iris template group for registration using at least one or two iris templates for registration generated from the at least one or two eye images, and storing and registering the iris template group in a database as unique iris data for the person;
   acquiring multiple eye images for authentication of the person using a camera;
   generating an iris template group for authentication using multiple iris templates for authentication generated from the multiple eye images for authentication;
   comparing the iris template group for authentication with the registered iris template group for each person registered in the database; and
   performing authentication or identification using the comparison result.

2. The method of claim 1, wherein each of the generating an iris template group for registration and the generating an iris template group for authentication from the eye image comprises dividing an iris region into at least two small regions based on the eye images photographed by the camera.

3. The method of claim 2, wherein the comparing the iris template group for authentication with the registered iris template group for each person registered in the database comprises: measuring distances between the small regions of the iris templates for authentication and the small regions of the registered iris templates at the same position, the distances between the small regions being measured with respect to the small regions at all positions of the registered iris templates and the iris templates for authentication; calculating one of the sum, an arithmetic average, an geometric average and a weighted average of the distances measured with respect to the small regions at all of the positions; and determining similarity between the iris template group for authentication and the registered iris template group.

4. The method of claim 3, wherein the performing authentication or identification using the comparison result comprises performing authentication or identification by determining similarity based on the distances measured between the iris template group for authentication and the registered iris template group, the authentication or identification being approved if the calculated distance is less than or equal to a preset threshold value.

5. The method of claim 4, wherein distances between registered small regions of the registered iris template group and small regions for authentication of the iris template group for authentication at the same position are obtained with respect to all pairs of the registered small regions and the small regions for authentication such that the smallest distance is selected as a distance between two small regions of the iris templates for authentication and the small regions of the registered iris templates.

6. The method of claim 5, wherein the distances between the small regions of the registered iris template group and the small regions of the iris template group for authentication are obtained while shifting two small regions corresponding to each other by at least one pixel in up, down, left and right directions, and the smallest value among the obtained distances is selected and used as a distance between two small regions to determine the similarity between the registered iris template group and the iris template group for authentication.

7. The method of any one of claims 2 to 6, wherein determination tags are provided to the small regions of the registered iris template group and the iris template group for authentication, and a region not corresponding to an available region is excluded in comparison to reduce a data processing time for iris recognition.

8. An apparatus for iris recognition using an iris template group for authentication comprising multiple iris templates for authentication, comprising:

   a camera attached to a front side of the apparatus to photograph multiple eye images for authentication of a person to be registered;
   a database storing and registering an iris template group as iris data unique to the person, the registered iris template group comprising iris templates for registration obtained from at least one or two eye images of the person photographed by the camera;
   a lighting device comprising at least one lighting group to provide a clear eye image when the eye images are acquired using the camera;
   an iris template group for authentication comprising multiple iris templates for authentication generated from the multiple eye images for authentication;
   a comparison unit comparing the iris template group for authentication with the registered iris template group stored in the database; and
   an authentication/identification unit performing authentication or identification using the comparison result.

9. The apparatus of claim 8, further comprising: a controller to selectively operate a plurality of lighting groups, wherein the lighting device is connected to the camera.

10. The apparatus of claim 8, wherein the registered iris template group and the iris template group for authentication are generated by dividing an iris region into at least two small regions based on the eye images photographed by the camera.

11. The apparatus of claim 10, wherein the comparison unit measures distances between the small regions of the iris templates for authentication and the small regions of the registered iris templates at the same position, the distances between the small regions being measured with respect to the small regions at all positions of the registered iris templates and the iris templates for authentication; calculates one of the sum, an arithmetic average, an geometric average and a weighted average of the distances measured with respect to the small regions at all of the positions; and determines similarity between the iris template group for authentication and the registered iris template group.

12. The apparatus of claim 11, wherein the authentication/identification unit performs authentication or identification by determining the similarity based on the distances measured between the iris template group for authentication and the registered iris template group, the authentication or identification being approved if the calculated distance is less than or equal to a preset threshold value.

13. The apparatus of claim 12, wherein distances between registered small regions of the registered iris template group and small regions for authentication of the iris template group for authentication at the same position is obtained with respect to all pairs between the registered small regions and the small regions for authentication such that the smallest distance is selected as the distance between the small regions of the iris templates for authentication and the small regions of the registered iris templates.

14. The apparatus of any one of claims 8 to 13, wherein the distances between the small regions of the registered iris template group and the small regions of the iris template group for authentication are obtained while shifting two small regions corresponding to each other by at least one pixel in up, down, left and right directions, and the smallest value among the obtained distances is selected and used as a distance between two small regions to determine the similarity between the registered iris template group and the iris template group for authentication.

**FIG. 1**

| Acquire at least one or two eye images of person to be registered |
|---|

↓

| Generate iris template group for registration using at least one or two iris templates for registration and register iris template group in database as unique personal iris data |
|---|

↓

| Acquire multiple eye images for authentication using camera |
|---|

↓

| Generate iris template group for authentication using multiple iris templates for authentication generated from multiple eye images for authentication |
|---|

↓

| Compare iris template group for authentication with registered iris template group for each person registered in database |
|---|

↓

| Perform authentication or identification using comparison result |
|---|

**FIG. 2**

**FIG. 3**

**FIG. 4**

FIG. 5

**FIG. 6**

First iris template for authentication

Registered iris template

Second iris template for authentication

<div style="text-align:center">

**INTERNATIONAL SEARCH REPORT**

</div>

| | International application No. |
|---|---|
| | **PCT/KR2010/003443** |

| | |
|---|---|
| A. CLASSIFICATION OF SUBJECT MATTER | |
| ***G06K 9/36(2006.01)i, G06K 9/46(2006.01)i, G06K 9/00(2006.01)i*** | |
| According to International Patent Classification (IPC) or to both national classification and IPC | |

**B. FIELDS SEARCHED**

Minimum documentation searched (classification system followed by classification symbols)
G06K 9/36; G06T 7/40; G06K 9/46; G06K 9/00; A61B 5/117; G06T 1/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: , ,

**C. DOCUMENTS CONSIDERED TO BE RELEVANT**

| Category* | Citation of document, with indication, where appropriate, of the relevant passages | Relevant to claim No. |
|---|---|---|
| A | KR 10-2009-0075083 A (INDUSTRY-ACADEMIC COOPERATION FOUNDATION, YONSEI UNIVERSITY) 08 July 2009<br>See abstract and figures 6-9 | 1-14 |
| A | KR 10-2007-0088982 A (IRITECH INC.) 30 August 2007<br>See abstract and pages 3, 4 | 1-14 |
| A | JP 2006-158827 A (MATSUSHITA ELECTRIC IND CO LTD) 22 June 2006<br>See abstract and pages 2-4 | 1-14 |
| A | KR 10-2005-0065195 A (ELECTRONICS AND TELECOMMUNICATIONS RESEARCH INSTITUTE) 29 June 2005<br>See abstract and figures 1, 2 | 1-14 |

| | | | |
|---|---|---|---|
| ☐ Further documents are listed in the continuation of Box C. | | ☒ See patent family annex. | |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 MAY 2011 (31.05.2011) | **03 JUNE 2011 (03.06.2011)** |

| Name and mailing address of the ISA/KR | Authorized officer |
|---|---|
| Korean Intellectual Property Office<br>Government Complex-Daejeon, 139 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2010/003443**

| Patent document cited in search report | Publication date | Patent family member | Publication date |
|---|---|---|---|
| KR 10-2009-0075083 A | 08.07.2009 | NONE | |
| KR 10-2007-0088982 A | 30.08.2007 | WO 2007-097510 A1 | 30.08.2007 |
| JP 2006-158827 A | 22.06.2006 | NONE | |
| KR 10-2005-0065195 A | 29.06.2005 | NONE | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100786204